# EUROPEAN PATENT APPLICATION

(11) **EP 1 427 044 A2**
(43) Date of publication of application: **09.06.2004**
(21) Application number: 03026088.9
(22) Date of filing: 13.11.2003
(51) Int. Cl.: H01M 8/02, H01M 8/10, C08J 5/22

(54) **Proton exchange membrane (PEM) for a fuel cell**

(30) Priority: 15.11.2002 US 295068
(71) Applicant: Celgard Inc., Charlotte, South Carolina 28273 (US)
(72) Inventor: Zhang, Zhengming, Charlotte North Carolina 28270 (US)
(74) Representative: Schweitzer, Klaus, Dr.

(57) **Abstract**

A new proton electrolyte membrane (PEM) and a fuel cell using that PEM are disclosed. The PEM comprises a polymer matrix and an ionically conductive ceramic material adapted to create a superconductive interface, the ceramic material being uniformly dispersed throughout the matrix. The polymer matrix is selected from the group consisting of proton exchange polymers, non-proton exchange polymers, and combinations thereof. The material is selected from the group consisting of beta aluminum oxide, fumed Al₂O₃, SnO₂(nH₂O), SiO₂, e.g. fumed SiO₂, H₄SiW₁₂O₂(28H₂O), tin mordenite/SnO₂ composite, zirconium phosphate-phosphate/silica composite.

## Description

A proton exchange membrane (PEM), comprising an ionically conductive ceramic material adapted to create a superconductive interface dispersed in a polymer matrix, for use in fuel cells is disclosed.

A fuel cell is an electrochemical device for generating electricity. A fuel cell typically comprises an anode, a cathode, and an electrolyte sandwiched between the anode and the cathode. Typically, a fuel source, such as hydrogen, is introduced at the anode. There, the electrons are catalytically stripped from the hydrogen and are transported via an external circuit across a load to the cathode, while the free protons are conducted from the anode across the electrolyte to the cathode. At the cathode, the protons are catalytically combined with oxygen (sourced from air) to form water.

In the development of such fuel cells, much effort is being placed on direct methanol fuel cells (DMFCs) where methanol is the source of hydrogen. The use of methanol, however, introduces a new level of complexity with regard to the selection of the electrolyte, also known as the proton exchange material (PEM). The most popular PEMs contain perfluorosulfonic acids (PFSAs), and are commercially available from Dupont, Dow, and Gore, similar materials are available from Ballard, Maxdem, and Dais. See U.S. Patent 6,059,943. These materials include a significant amount of water to maintain their proton exchange capability.

One problem associated with the use of these PEMs in DMFCs is "methanol crossover." Here, methanol is absorbed into the PEM, via the water, at the anode and transported, via diffusion, across the membrane to the cathode, where it detrimentally combines with the catalyst and thereby reduces the overall efficiency of the fuel cell. It is believed that the rate at which the methanol moves across the membrane is the same at which the protons move across the membrane.

Accordingly, there is a need to improve PEMs so that the proton transfer rate across the membrane is greater than the methanol transfer rate across the membrane.

U.S. Patent 6,059,943 discloses a PEM where the membrane consists of a polymeric matrix filled with inorganic hydrated oxide particles. The polymeric matrix is described at column 8, line 58 - column 9, line 8 and at column 10, line 64 - column 11, line 62. Those materials include, for example, PFSAs, polytetrafluorethylenes (PTFEs), polysulfones, and PVC. The inorganic oxides are described as hydrated metal oxides, preferably the metal being selected from the group of molybdenum, tungsten, and zirconium, and mixtures thereof. See column 8, lines 52-68 and column 10, lines 62-64. The sole example of that invention discusses a porous PTFE membrane impregnated with an alpha zirconium phosphate hydrate (α-Zr(HPO₄)₂.H₂O).

The present invention provides a new PEM and a fuel cell using that PEM. The proton electrolyte membrane (PEM) according to the invention comprises a polymer matrix and an ionically conductive ceramic material adapted to create a superconductive interface, the ceramic material being uniformly dispersed throughout the matrix. The polymer matrix is selected from the group consisting of proton exchange polymers, non-proton exchange polymers, and combinations thereof. The material is selected from the group consisting of beta aluminum oxide, fumed Al₂O₃, SnO₂(nH₂O), SiO₂, e.g., fumed SiO₂, H₄SiW₁₂O₂(28H₂O), tin mordenite/SnO₂ composite, zirconium phosphate-phosphate/silica composite.

Fuel cell refers to an electrochemical device that converts a fuel into electricity and has an anode and a cathode that sandwich a polymer electrolyte membrane or proton exchange membrane (PEM). Such fuel cells may use hydrogen as a fuel source. A fuel cell system may include a fuel reformer to convert a hydrocarbon fuel, for example, natural gas or methanol or gasoline, into a source of hydrogen. A fuel cell system may also be a direct methanol fuel cell (DMFC). Anode and cathode, as used herein, refer to those systems as are typically understood with regard to the foregoing fuel cells.

The PEM is typically a nonporous, gas impermeable membrane having a thickness ranging from 20 to 400 microns. The PEM consists of a polymer matrix having an ionically conductive ceramic material adapted to create a superconductive interface, the ceramic material being uniformly dispersed throughout the matrix. The ionically conductive ceramic material adapted to create a superconductive interface is believed to act as a proton superconductive material. This material promotes the very rapid transfer of protons between the anode and the cathode. It is postulated that transfer occurs at an interface between the material and the polymer matrix or through the material. The proton transfer rate obtained with the material is in excess of the rate at which the methanol is or would be transferred across the PEM. The polymer matrix preferably consists of 10 to 70 percent by volume of the PEM, while the material preferably comprises 30 to 90 percent by volume of the PEM. The material must also be uniformly dispersed throughout the matrix. While simple mixing of ceramic material and polymer of the matrix will suffice to meet the dispersion requirement, it is preferred that uniform dispersion be obtained by high shear mixing and/or with the use of dispersing aids. High shear mixing may include: low viscosity, high speed mixing and high viscosity, low speed mixing. Dispersing aids are,surface active agents added to a suspending medium to promote uniform and maximum separation of fine solid particles. To facilitate manufacture, the PEM may be extruded or cast into a film form. For example, polymer in a dry form may be mixed with material and then extruded into a film, or polymer in polymer solution may be mixed with the material and then cast into a film. To determine which combinations of polymer matrix and material create the superconductive interface, one may measure the conductivity of the combination and compare that value to the known conductivities of the components of the combination. If the measured value is greater than the greatest single component conductivity value, then the combination is superconductive.

The polymer matrix is selected from the group consisting of proton exchange polymers, non-proton exchange polymers, and combinations thereof. Proton exchange polymers, as used herein, include polymers with perfluorosulfonic acid (PFSA) side chains or side chains with sulfonate (R-SO₃-) functionality. Examples of these materials are set forth in Table 1.

**TABLE 1**

| Polymers Used as Ion Conductors | | |
|---|---|---|
| **Source** | **Name** | **Polymer Structure** |
| DuPont | Nafion® | Perfluoro side chains on a PTFE backbone |
| Dow | | Perfluoro side chains on a PTFE backbone |
| W.L. Gore | Gore Select™ | Perfluoro side chains on a PTFE backbone in a matrix |
| Ballard | | Trifluorostyrene backbone, with derivatized side chains |
| Maxdem | Poly-X™ | Polyparaphenylene backbone |
| DAIS Corp. | | Sulfonated side chains on a styrenebutadiene backbone |
| Assorted | | Sulfonated side chains grafted to PTFE and other backbones |

The non-proton exchange polymers include polyolefins (such as polypropylene and polyethylene), polyesters (such as PET), and other polymers, for example, PBI (polybenzimidazole), PTFE (polytetrafluoroethylene), PS (polysulfones), PVC (polyvinyl chlorides), PVDF (polyvinylidene fluoride), and PVDF copolymers, such as PVDF:HFP (polyvinylidene fluoride: hexafluoro propylene).

The ionically conductive ceramic materials adapted to create a superconductive interface are selected from the group consisting of beta aluminum oxide, fumed Al₂O₃, SnO₂(nH₂O), SiO₂, e.g. , fumed SiO₂, H₄SiW₁₂O₂(28H₂O) , tin mordenite/SnO₂ composite, zirconium phosphate-phosphate/silica composite. Beta alumina refers to proton conductive β'-alumina and/or β''-alumina (PCBA), which can be obtained by proton ion exchange process of the starting beta-alumina that has a chemical formula of Na₍₁₊ₓ₎Al_{(11-x/2)}O₁₇ or Na₍₁₊ₓ₎Al₁₁O_{(17+x/2}.

## Claims

1. A proton exchange membrane (PEM) comprising a polymer matrix and an ionically conductive ceramic material adapted to create a superconductive interface, the ceramic material being uniformly dispersed throughout the matrix, the polymer matrix being selected from the group consisting of proton exchange polymers, non-proton exchange polymers, and combinations thereof, the material being selected from the group consisting of beta aluminum oxide, fumed Al₂O₃, SnO₂(nH₂O), SiO₂, e.g., fumed SiO₂, H₄SiW₁₂O₂(28H₂O), tin mordenite/SnO₂ composite, zirconium phosphate-phosphate/silica composite.

2. The proton exchange membrane of Claim 1 wherein the PEM comprises 10 to 70 percent by volume polymer matrix, while the material comprises 30 to 90 percent by volume of the PEM.

3. The proton exchange membrane of Claim 1 or 2 wherein the membrane has a thickness ranging from 20 to 400 microns.

4. The proton exchange membrane of Claim 1, 2 or 3 wherein the proton exchange polymer being a polymer with perfluorosulfonic acid (PFSA) side chains or side chains with sulfonate (R-SO₃-) functionality.

5. The proton exchange membrane of one of Claims 1 to 4 wherein the non-proton exchange polymer is selected from the group consisting of polyolefins, polyesters, PBI, PTFE, PS, PVC, PVDF, and copolymers thereof.

6. A fuel cell comprising an anode, a cathode, and an electrolyte sandwiched between the anode and the cathode, the electrolyte being a proton exchange membrane according to one of Claims 1 to 5.
